# EUROPEAN PATENT SPECIFICATION

(11) **EP 4 405 167 B1**
(45) Date of publication and mention of the grant of the patent: **20.08.2025**
(21) Application number: 22761297.5
(22) Date of filing: 29.08.2022
(51) Int. Cl.: B29D 30/32, B29D 30/14

(54) **STITCHER, TIRE BUILDING MACHINE COMPRISING SAID STITCHER AND METHOD FOR STITCHING A TIRE COMPONENT**
NÄHVORRICHTUNG, REIFENHERSTELLUNGSMASCHINE MIT DER NÄHVORRICHTUNG UND VERFAHREN ZUM NÄHEN EINER REIFENKOMPONENTE
DISPOSITIF DE ROULETAGE, MACHINE DE CONSTRUCTION DE PNEU COMPRENANT LEDIT DISPOSITIF DE ROULETAGE ET PROCÉDÉ POUR LE ROULETAGE D'UN COMPOSANT DE PNEU

(30) Priority: 24.09.2021 NL 2029249
(43) Date of publication of application: 31.07.2024
(73) Proprietor: VMI Holland B.V., 8161 RK Epe (NL)
(72) Inventor: SCHERPENHUIZEN, Herman Sebastiaan, 8161 RK EPE (NL); SMIT, René, 8161 RK EPE (NL); DE GRAAF, Martin, 8161 RK EPE (NL)
(74) Representative: Melchior, Robin
(86) International application number: PCT/NL2022/050491
(87) International publication number: WO 2023/048560

(56) References cited:
- WO-A1-81/03638
- DE-T5- 112013 006 231
- US-A- 1 613 519
- US-A- 2 488 863
- US-A- 3 616 060

## Description

### BACKGROUND

The invention relates to a stitcher, a tire building machine comprising said stitcher and a method for stitching a tire component.

WO 2018/111091 A2 discloses a tire building machine having a tire building drum, in particular a crown drum for single stage tire building, comprising two drum halves. Each drum half comprises a crown-up section, a turn-up section and a bead-lock section that is located in the axial direction between the crown-up section and the turn-up section. The bead-lock section comprises a plurality of bead-lock members distributed circumferentially about a central axis and movable in the radial direction between a release position and a bead-lock position.

Further tire building machines comprising a tire building drum and a stitcher for stitching a tire component are disclosed in documents US 2,488,863, US 1,613,519 and US 3,616,060.

### SUMMARY OF THE INVENTION

A disadvantage of the known tire building according to WO 2018/111091 A2 is that in some cases a side wall needs to be applied by folding said side wall around the radially inner side of the bead, in particular between the bead and the drum. The folding of the sidewall around the radial inner side of the bead is particularly difficult because the sidewall forms a skirt along the bead that is hard to fold consistently around the radial inner side of the bead. This cannot be done manually. However, the available space between the bead and the bead-lock members in the release position is only a few millimeters and insufficient to accommodate a conventional stitching roller. Hence, the drum halves need to be at least partially moved away in the axial direction to allow folding of a side wall around the bead. Alternatively, the side wall has to be folded around the bead on a first drum with a smaller diameter, after which the tire components have to be transferred to a shaping drum, as is the case in conventional two stage tire building.

It is an object of the present invention to provide a stitcher, a tire building machine comprising said stitcher and a method for stitching a tire component, with an improved approach to applying the side wall.

According to a first aspect, the invention provides a tire building machine comprising a tire building drum and a stitcher for stitching a tire component, wherein the tire building drum comprises bead-lock segments which are retractable into a recessed position relative to the rest of the tire building drum, wherein the stitcher comprises a disc-shaped stitching body having a first side for pressing on the tire component during stitching and a second side opposite to the first side, wherein the second side is concave, wherein the stitcher is positionable relative to the tire building drum such that the concave second side fits at least partially over a transition between the bead-lock segments in the recessed position and the rest of the tire building drum.

Because of the concave second side, the stitcher according to the first aspect of the invention can be moved closer to the circumference of the tire building drum without colliding, in particular at said transition or transition edge, so that the stitcher can reach into the relatively small space between the retracted bead-lock segments and the radially inner side of the bead.

Preferably, the disc-shaped stitching body is concentric about a stitching axis, wherein the first side defines a pressing surface that is arranged at a slope that is inclined away from the second side at a clearance angle in a radial direction away from the stitching axis. More preferably, the clearance angle is in a range of zero to fifteen degrees, and most preferably in a range of two to ten degrees. Because of the clearance angle, the stitcher can be scooped underneath the radially inner side of the bead with the stitching axis at an oblique angle to a vertical plane, thereby tilting at least a part of the pressing surface towards or into a horizontal plane. The pressing surface can thus effectively fold and press the tip of the tire component around the radially inner side of the bead while the stitcher is arranged at an oblique angle to the tire building drum.

According to a second aspect, the invention provides a method for stitching a tire component with the use of a tire building machine according to the first aspect of the invention, wherein the method comprises the step of:
- positioning the stitcher relative to the tire building drum such that the concave second side fits at least partially over a transition between the bead-lock segments in the recessed position and the rest of the tire building drum.

The method relates to the practical implementation of the aforementioned tire building machine and thus has the same technical advantages, which will not be repeated hereafter.

Preferably, the disc-shaped stitching body is concentric about a stitching axis, wherein the first side defines a pressing surface that is arranged at a slope that is inclined away from the second side at a clearance angle in a radial direction away from the stitching axis, wherein the method comprises the step of:
- positioning the stitcher relative to the tire building drum such that the stitching axis is at an oblique angle to a vertical plane, thereby tilting at least a part of the pressing surface towards or into a horizontal plane.

In said horizontal or substantially horizontal orientation, the pressing surface can effective fold and press onto the tip of the tire component from within the bead.

According to a third aspect, the present disclosure provides a stitcher for stitching a tire component, wherein the stitcher defines a primary stitching axis and comprises a primary stitching member concentric to and rotatable about said primary stitching axis for stitching the tire component along a first part of a stitching path, wherein the stitcher further comprises a secondary operational member and a positioning member for moving the secondary operational member relative to the primary stitching axis into an active position in which the secondary operational member partially projects beyond the primary stitching member in a radial direction perpendicular to the primary stitching axis, wherein the positioning member is rotatable about the primary stitching axis, wherein the rotation of the positioning member is arranged to be driven by Eddy current generated between said positioning member and the primary stitching member.

The secondary operational member can be dimensioned or optimized to fit into a space into which the primary stitching member can not fit. More in particular, the secondary operational member can fit in the relatively small space between the bead-lock members and the radial inner side of the bead. The forces generated by Eddy current can be used to pull along the positioning member as the primary stitching member rotates. Therefore, no separate drive means is necessary to drive the positioning member.

In one embodiment the secondary operational member is a secondary stitching member for stitching the tire component along a second part of the stitching path. The secondary stitching member can fit in the relatively small space between the bead-lock members and the radial inner side of the bead to stitch and/or fold the sidewall along the radial inner side of the bead.

Preferably, the stitcher defines a secondary stitching axis, wherein the secondary stitching member is concentric to and rotatable about said secondary stitching axis. The secondary stitching member can thus stitch and/or fold the sidewall while the drum with the sidewall and bead supported thereon are being rotated, with a minimal amount of friction.

In a further embodiment the rotation of the positioning member about the primary stitching axis is arranged to be driven by the rotation of the primary stitching member. Therefore, no separate drive means is necessary to drive the positioning member.

In a further embodiment the positioning member is rotatable between a standby position in which the secondary operational member is spaced apart from the tire component during stitching and the stitching position. Hence, the secondary operational member can be switched, moved and/or rotated between said positions depending on the stitching operation that is being performed.

In a further embodiment the stitcher comprises a first limiter and a second limiter for limiting the rotation of the positioning member between the standby position and the active position. Consequently, the secondary operational member can be moved between said two positions. In particular, it can be prevented that the positioning member is moved beyond said two positions where the secondary operational member can potentially interfere with the operation of the primary stitching member.

In a further embodiment comprises the first limiter and the second limiter limit the rotation of the positioning member to a range of less than one-hundred-and-eighty degrees. Consequently, the positioning member can be moved between two positions that are spaced apart over one-hundred-and-eighty degrees or less.

In a further embodiment the positioning member is configured for rotating in the same direction about the primary stitching axis as the primary stitching member. Hence, the direction of rotation of the primary stitching member can be used to control the direction of rotation of the positioning member.

In another embodiment, the positioning member is provided with a plurality of magnets. The rotation of the primary stitching member through the magnetic fields generated by the plurality of magnets on the positioning member can cause the aforementioned Eddy current.

More preferably, the positioning member comprises a disc-shaped body concentric to the primary stitching axis, wherein the plurality of magnets are distributed circumferentially over the disc-shaped body about said primary stitching axis. The Eddy current can thus be equally generated across the entire disc-shaped body.

In a further embodiment the plurality of magnets have alternating polarities. The alternating polarities increase the Eddy current that can be generated.

In a further embodiment the primary stitching member comprises ferromagnetic or paramagnetic material. The magnetic interaction between the magnets and the ferromagnetic material can generate sufficient Eddy current to pull along the positioning member.

In a further embodiment the primary stitching member comprises aluminum. Aluminum in itself is not a very strong magnetic material. However, when moved through the magnetic fields of the plurality of magnets, it can act as a paramagnetic material that can generate sufficient Eddy current to pull along the positioning member.

In a further embodiment the primary stitching member has a first side for mounting the stitcher to a robotic manipulator, wherein the secondary operational member is located at a second side of primary stitching member facing away from the first side. The secondary operational member can thus be located at a side of the primary stitching member that is otherwise free of components, such that it can be moved as close as possible to the circumference of the tire building drum without colliding with said tire building drum.

In a further embodiment the primary stitching member defines a cavity, wherein the positioning member is at least partially accommodated within said cavity. Hence, the positioning member does not add to the thickness or overall size of the stitcher. Consequently, the stitcher can be moved closer to the circumference of the tire building drum without colliding.

In a further embodiment the primary stitching axis and the secondary stitching axis are parallel or substantially parallel to each other. The stitching members can thus be rotated about parallel stitching axis, operating in the same or substantially the same orientation.

According to a fourth aspect, the present disclosure provides a tire building machine comprising the stitcher according to any one of the embodiments of the third aspect of the invention and a tire building drum.

The tire building machine includes the aforementioned stitcher and thus has the same technical advantages, which will not be repeated hereafter.

Preferably, the tire building drum is rotatable about a drum axis in a first rotation direction and a second rotation direction, opposite to the first rotation direction, wherein the rotation of the primary stitching member about the primary stitching axis is arranged to be driven by the rotation of the tire building drum, wherein the positioning member is rotatable about the primary stitching axis in a third rotation direction and a fourth rotation direction opposite to the third rotation direction, wherein the rotation of the positioning member about the primary stitching axis is arranged to be driven by the rotation of the primary stitching member and wherein a change in rotation of the tire building drum from the first rotation direction to the second rotation direction controls the rotation direction in which the positioning member is rotated. Hence, the rotation direction of the tire building drum can indirectly control the rotation of the positioning member, and thus the position of the secondary operational member. In particular, the rotation of the tire building drum can be reversed to move the secondary operational member into an operative stitching position. Conveniently, no dedicated control or drive means are required at the stitcher to move the secondary operational member.

According to a fifth aspect, the present disclosure provides a method for stitching a tire component with the use of a stitcher according to any one of the embodiments of the third aspect of the invention, wherein the method comprises the steps of:
- using the primary stitching member to stitch the tire component along the first part of the stitching path; and
- using the positioning member to move the secondary operational member relative to the primary stitching axis into the active position.

The method relates to the practical implementation of the aforementioned stitcher and thus has the same technical advantages, which will not be repeated hereafter.

In one embodiment the secondary operational member is a secondary stitching member, wherein the method further comprises the step of:
- using the secondary stitching member to stitch the tire component along the second part of the stitching path.

In a further embodiment of the method the rotation of the positioning member about the primary stitching axis is driven by the rotation of the primary stitching member.

In a further embodiment the rotation of the positioning member is limited between a standby position and the active position.

In a further embodiment the rotation of the positioning member is limited between the standby position and the active position to a range of less than one-hundred-and-eighty degrees.

In a further embodiment the positioning member is rotated in the same direction about the primary stitching axis as the primary stitching member.

In a further embodiment the rotation of the positioning member is driven by Eddy current generated between said positioning member and the primary stitching member.

According to a sixth aspect, the present disclosure provides stitcher for stitching a tire component, wherein the stitcher comprises a hub that is rotatable about a stitcher axis and a plurality of stitching segments connected to, distributed around and extending radially away from the hub, wherein the stitching segments are resiliently flexible with respect to said hub.

The stitching segments can provide a segmented circumference which can effectively adapt to the shape of the tire component to be stitched.

Preferably, at least two directly adjacent stitching segments of the plurality of stitching segments are mutually coupled in a circumferential direction about the stitcher axis. By having the stitching segments influence each other's flexing to some extent, the shape of the stitcher is deformed more gradually, i.e. without abrupt steps between the stitching segments.

The various aspects and features described and shown in the specification can be applied within the scope of claims.

### BRIEF DESCRIPTION OF THE DRAWINGS

The invention will be elucidated on the basis of an exemplary embodiment shown in the attached schematic drawings, in which:
figures 1-3 show cross sections of a tire building machine with a stitcher according to a first embodiment of the invention during the steps of a method for stitching a tire component;
figure 4 shows a cross section of the stitcher according to figure 3 in more detail;
figures 5 and 6 show two modes of operation of the stitcher according to figure 4;
figure 7 shows a cross section of an alternative tire building machine with an alternative stitcher according to a second embodiment of the invention;
figure 8 shows a cross section of a further alternative tire building machine having a further alternative stitcher according to a third embodiment of the invention;
figure 9 shows a top view of the stitcher according to figures 6 and 7;
figure 10 shows a cross section according to the line X-X in figure 9; and
figure 11 shows a cross section according to the line XI-XI in figure 9.

### DETAILED DESCRIPTION OF THE INVENTION

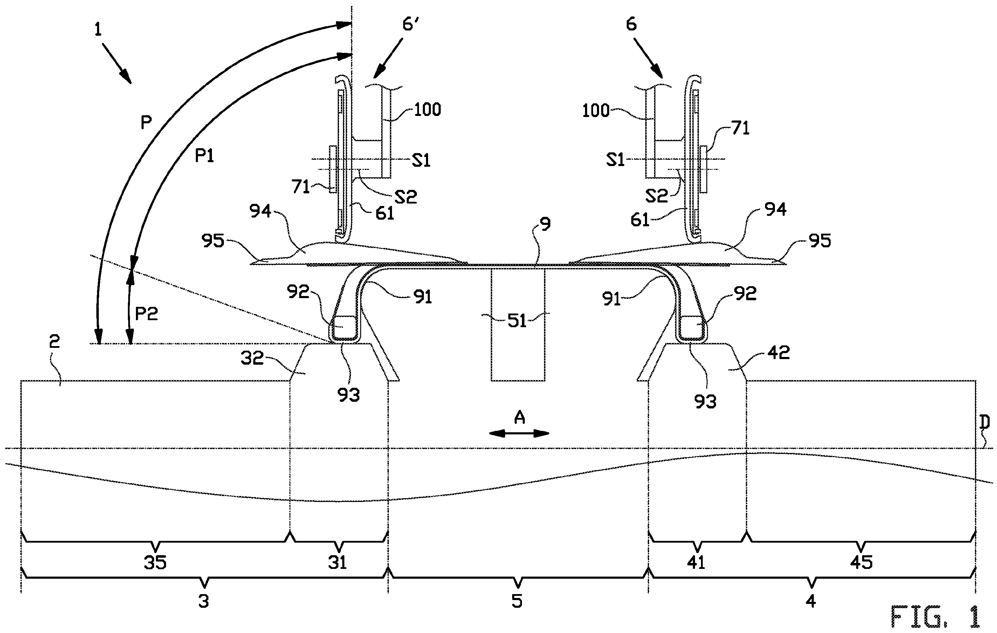

Figures 1-3 show a tire building machine 1 for building a green or unvulcanized tire 9 according to an first exemplary embodiment of the invention.

The tire building machine 1 comprises a tire building drum 2 for forming the green tire 9. The green tire 9 is formed by shaping one or more plies 91, in particular body plies or breaker plies, around a bead 92 into a tire carcass. The bead 92 is an annular or substantially annular element that has a radially inner side 93 that defines an inner bead radius B. The green tire 9 is further provided with a side wall 94 that, in this example, is applied to the carcass by folding it, at least partially, around the radially inner side 93 of the bead 92. In particular, the inner edge or inner tip 95 of the side wall 94 is folded around the radially inner side 93 of the bead 92.

The tire building drum 2 is rotatable about a drum axis D extending in an axial direction A. The tire building drum 2 comprises a first drum half 3, a second drum half 4 and a center section 5 in the axial direction A between said drum halves 3, 4.

Each drum half 3, 4 comprises a bead-lock section 31, 41 for retaining the bead 92. The bead-lock section 31, 41 is provided with a plurality of bead-lock segments 32, 42 which are expandable in a radial direction R perpendicular to the drum axis D to engage and retain the bead 92 at the inner bead radius B. The plurality of bead-lock segments 32 are retractable or contractable in to a flush or recessed position relative to the rest of the tire building drum 2 to allow fitting of the one or more plies 91 and the beads 92 onto the tire building drum 2 and to provide sufficient space for folding of the side wall 94 around the radially inner side 93 of said beads 92.

Each drum half 3, 4 further comprises a turn-up section 35, 45 for folding up the parts of the one or more plies 91 located outside of the center section 5 around the bead 92 onto the parts of the one or more plies 91 at said center section 5. In particular, the turn-up sections 35, 45 are provided with turn-up arms (not shown).

The center section 5 comprises a plurality of crown segments 51 which are expandable in the radial direction to crown-up the parts of the one or more plies 91 at the center section 5 into a toroidal or substantially toroidal shape.

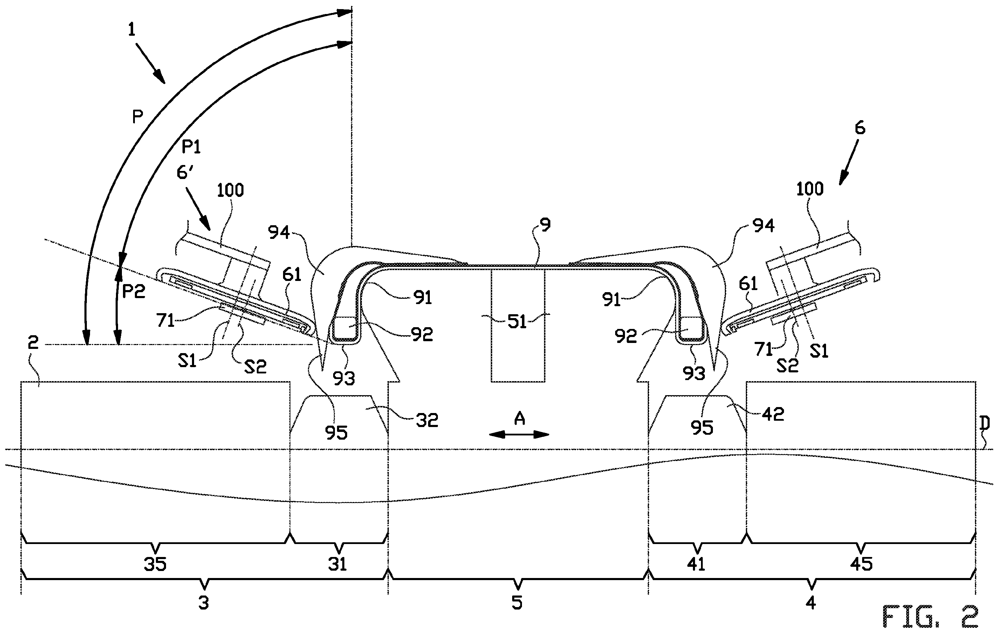

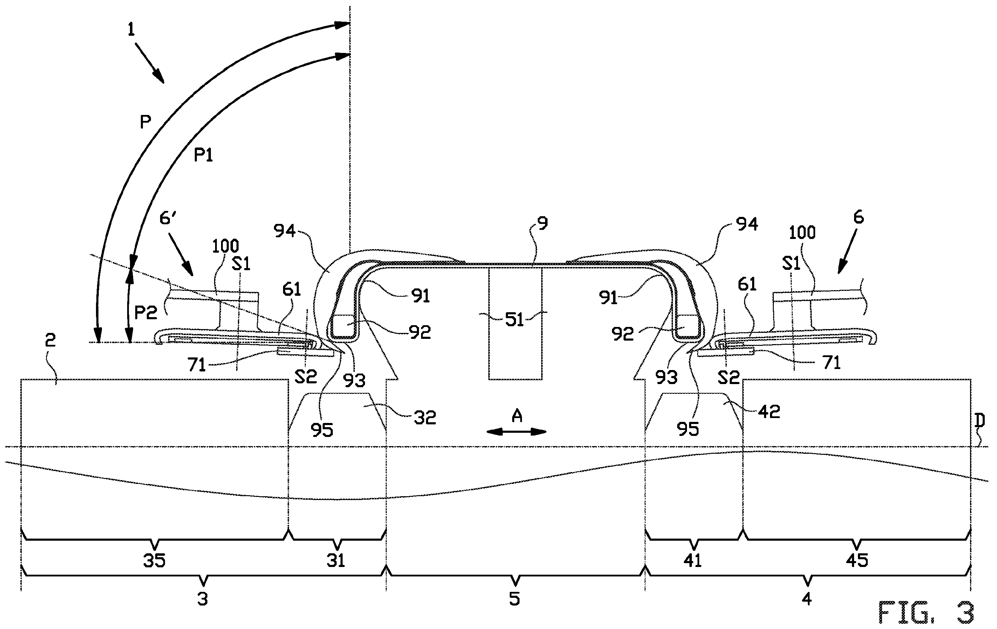

As shown in figure 1, the tire building machine 1 further comprises a stitcher 6 and a further stitcher 6' at a first side and a second side, respectively, of the center section 5, for stitching the side walls 94 to the crowned-up parts of the one or more plies 91 at the center section 5. Each stitcher 6, 6' is mounted on a robotic manipulator 100 that controls the orientation of the respective stitcher 6, 6' as a whole relative to the tire building drum 1. The tire building drum 1 is rotated about the drum axis D to cause a relative movement between the one or more plies 91 and the side walls 94 supported thereon and the stitchers 6, 6'. The stitchers 6, 6' are identical or of similar structure, except for that they are mirrored about the center section 5 and/or operate mirror symmetrically. The stitchers 6, 6' are moved on opposite sides of the center section 5 along respective stitcher paths P. In particular, the stitchers 6, 6' are moved along a first part P1 of the stitcher path P, as shown in figures 1 and 2, and a second part P2 of the stitcher path P, as shown in figure 3. Hereafter, only the stitcher 6 shown at the side of the second drum half 4 will be described in more detail. The description however applies, *mutatis mutandis*, to the further stitcher 6'.

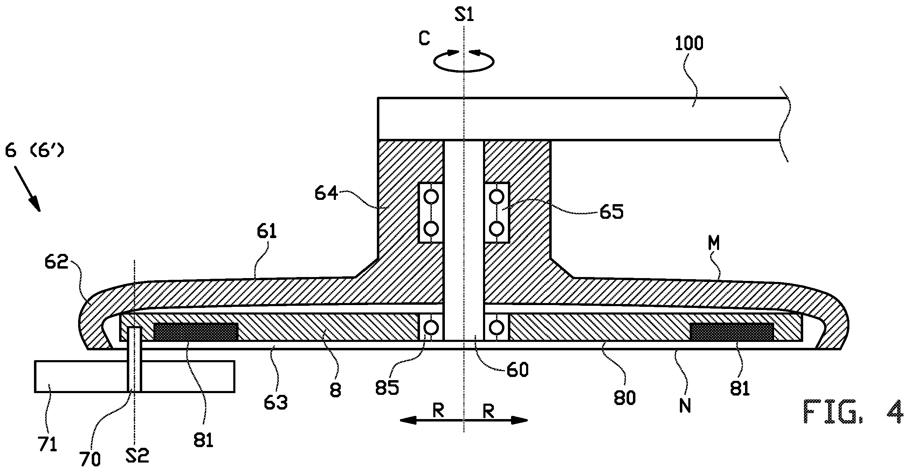

As best seen in figure 4 the stitcher 6 comprises a primary stitching shaft 60 that defines a primary stitching axis S1. The stitcher 6 comprises a primary stitching member 61 that is concentrically mounted to said primary stitching shaft 60. In other words, the primary stitching member 61 is concentric to the primary stitching axis S1. The primary stitching member 61 is rotatable about the primary stitching shaft 60 and/or the primary stitching axis S1 for stitching the side wall 94. Bearings 65 are provided to facilitate rotation of the primary stitching member 61 about said primary stitching shaft 60. Alternatively, the primary stitching shaft 60 may be fixed to the primary stitching member 61, provided that the primary stitching shaft 60 can rotate relative to the manipulator 100.

The primary stitching member 61 comprises a stitching body that has a first side M that defines a stitching surface 62 for pressing against the side wall 94. The stitching body is preferably disc-shaped, wheel-shaped or roller-shaped. The stitching surface 62 is rounded or convex near the circumferential edge or contour of the primary stitching member 61 for pressing both in a radial direction R perpendicular to the primary stitching axis S1 and a direction oblique to said radial direction R. The stitching body further has a mounting head 64 at the first side M for mounting the primary stitching member 61 onto the primary stitching shaft 60.

The stitching body of the primary stitching member 61 may comprise ferromagnetic or paramagnetic material, such as aluminum.

The primary stitching member 6 further has a second side N facing away from the first side M. At the second side N, the primary stitching member 61 is provided with a cavity 63. The primary stitching shaft 60 extends through the primary stitching member 61 into the cavity 63.

The stitcher 6 is provided with a secondary operational member 71. In this example, the secondary operational member 71 is a secondary stitching member 71 that is concentrically mounted to a secondary stitching axis 70 defined by the stitcher 6. In other words, the secondary stitching member 71 is concentric to the secondary stitching axis S2. The secondary stitching member 71, like the primary stitching member 61, also comprises a disc-shaped, wheel-shaped or roller-shaped stitching body. However, the stitching body of the secondary stitching member 71 is a lot smaller than the stitching body of the primary stitching member 61, preferably at least a factor two or three smaller. The secondary stitching member 71 is rotatable about the secondary stitching shaft 70 and/or the secondary stitching axis S2 for stitching side wall 94 along the radially inner side 93 of the bead 92. The secondary stitching member 71 is located at the second side N of primary stitching member 61.

Alternatively, the secondary operational member 71 may have a function different from stitching, for example cutting, brushing, pulling, tagging or detecting. The secondary operational member 71 may for example be a brush or a sensor.

The description hereafter is directed to the secondary stitching member 71, but the same features can be applied *mutatis mutandis* to the alternative secondary operational members described above.

The stitcher 6 further comprises a positioning member 8 for moving the secondary stitching axis S2 relative to the primary stitching axis S2 into a stitch position or an active position, as shown in figure 4, in which the secondary stitching member 71 partially projects beyond the primary stitching member 61 in the radial direction R. In particular, the secondary stitching member 71 projects beyond the circumferential edge and/or contour of the primary stitching member 61 in said stitching position. As such, the secondary stitching member 71 can reach into the relatively small gap between the radially inner side 93 of the bead 92 and the bead-lock segments 32, 42 of the tire building drum 2.

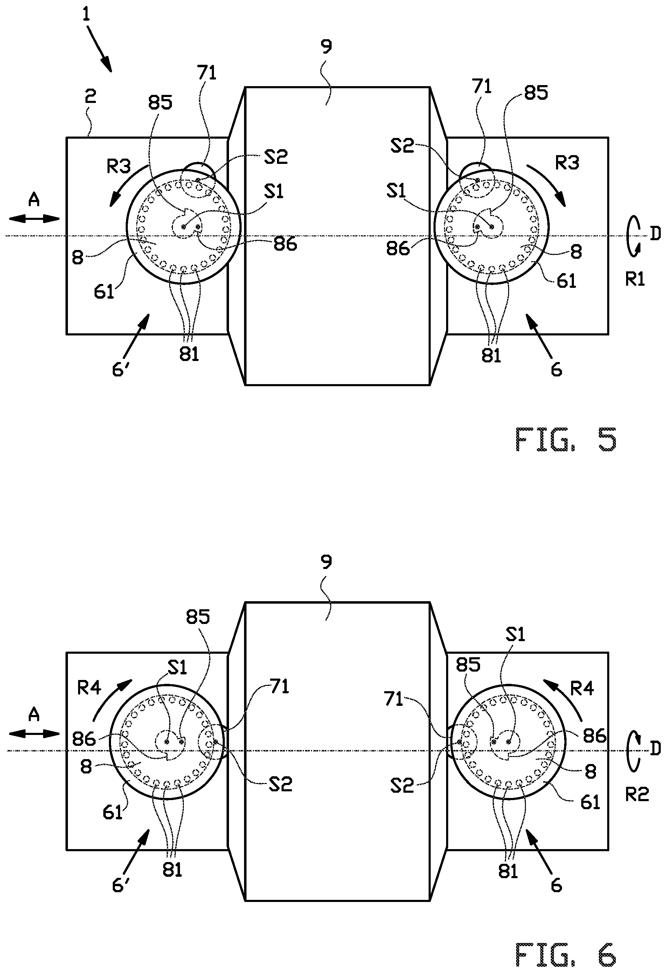

As best seen in figure 6, the secondary stitching member 71, in the stitch position, is located slightly off center with respect to the drum axis D. In particular, the secondary stitching member 71 is offset with respect to the drum axis D such that the secondary stitching axis S2 does not intersect with said drum axis D. This ensures that only the part of the circumference of the secondary stitching member 71 that rotates towards and/or into the small gap between the radially inner side 93 of the bead 92 and the bead-lock segments 32, 42 of the tire building drum 2 contacts the bead 92, whereas the part of the circumference of the secondary stitching member 71 that is rotating away from and/or out of said small gap remains free from and/or does not come into contact with said bead 92. This avoids forces between the bead 92 and the secondary stitching member 71 that could potentially counteract each other.

The positioning member 8 is rotatable about the primary stitching shaft 60 and/or the primary stitching axis S1. The positioning member 8 may be mounted directly onto the primary stitching shaft 60, for example with bearings 85 as shown in figure 4, or it may alternatively be carried by suitably shaped edges or guides provided in the cavity 63 of the primary stitching member 61 so as to be rotatable about the primary stitching axis S1.

In another embodiment (not shown), an alternative positioning member may be provided which displaces the secondary stitching member 71 linearly, for example in the radial direction R to move said secondary stitching member 71 between a standby position fully inside the circumference of the primary stitching member 61 and a stitching position at least partially projecting beyond the circumference of said primary stitching member 61.

The secondary stitching shaft 70 is coupled to, connected to or carried by the positioning member 8 in a position spaced apart from the primary stitching shaft 60. In other words, the primary stitching axis S1 and the secondary stitching axis S2 are spaced apart from each other. In said spaced apart position, the secondary stitching member 71, which is a lot smaller than the primary stitching member 61, can be considered as a planetary satellite member to the primary stitching member 61, almost as if it is travelling along an orbit defined by the edge of the primary stitching member 61. The positioning member 8 is configured for holding the secondary stitching shaft 70 in an orientation parallel or substantially parallel to the primary stitching shaft 60. In other words, the primary stitching axis S1 and the secondary stitching axis S2 are parallel or substantially parallel to each other.

As best seen in figure 5 and 6, the positioning member 8 is disc-shaped or has a disc-shaped body 80. In particular, the positioning member 8 is provided with a plurality of magnets 81 distributed evenly and/or circumferentially over the disc-shaped body 80 about said primary stitching axis S1. In this example, the plurality of magnets 81 have alternating polarities.

The positioning member 8 is further provided with a first limiter 85 and/or a second limiter 86 for limiting the rotation of the positioning member 8 about the primary stitching shaft 60 and/or the primary stitching axis S1 to a range of less than one-hundred-and-eighty degrees, preferably less than one-hundred degrees. In this exemplary embodiment, the first limiter 85 and the second limiter 86 are defined or formed by the terminal ends of an angular slot that interacts with a pin of the primary stitching member 61. Alternatively, the limiters 85, 86 may be formed by any suitably placed obstacle provided on one of the primary stitching member 61, the primary stitching shaft 60, the positioning member 8 and/or the secondary stitching member 71 and interacting with another one of the primary stitching member 61, the primary stitching shaft 60, the positioning member 8 and the secondary stitching member 71.

A method for stitching the side wall 94 with the use of the aforementioned stitcher 6 will now be briefly elucidated with reference to figures 1-6.

Figures 1 and 5 show the situation at the start of a primary stitching operation, with the secondary stitching member 71 in a standby position in which the secondary stitching member 71 is spaced apart from and does not interact with and/or press onto the side wall 94. The manipulator 100 has positioned the primary stitching member 61 at the start of the first part P1 of the stitching path P, in an orientation relative to the side wall 94 such that the radially outer parts of said side wall 94 can be pressed and/or stitched onto the one or more plies 91 underneath. Figure 2 shows the situation after the manipulator 100 has moved the primary stitching member 61 further along and towards the end of the first part P1 of the stitching path P. The secondary stitching member 71 is still held in the standby position. Figures 3 and 6 show the situation at the start of a secondary stitching operation, when the secondary stitching member 71 is moved relative to the primary stitching shaft 60 and/or the primary stitching axis S1 from the standby position into the stitching position. As best seen in figure 3, the stitcher 6 can now be moved by the manipulator 100 such that the secondary stitching member 71 follows, presses and folds the side wall 94 around the radially inner side 93 of the bead 92, without colliding with the bead-lock segments 32, 42 underneath.

In this exemplary embodiment, the positioning member 8 is not directly driven or controlled by any dedicated drive means. Instead, the rotation of the primary stitching member 61 is transferred onto the positioning member 8. In particular, the positioning member 8 is configured for rotating in the same direction about the primary stitching axis S1 as the primary stitching member 61. In other words, the positioning member 8 is configured to passively follow the rotation of the primary stitching member 61. In this example, the transfer of rotation is achieved by generating Eddy current as the primary stitching member 61 is rotated relative to the plurality of magnets 81 of the positioning member 8. The positioning member 8 is freely rotatable. Hence, it will tend to be pulled along by the primary stitching member 61. As such, the positioning member 8 can be driven by the rotation of the primary stitching member 61, within the range defined by the limiters 85, 86, to move the secondary stitching member 71 from the standby position, as shown in figure 5, to the stitching position, as shown in figure 6.

Alternatively, the rotation of the primary stitching member 61 can be transferred onto the positioning member 8 via other transmission means, in particular a mechanical transmission. For example, a mechanical friction may be provided between the primary stitching shaft 60 and the positioning member 8. In another example, the centrifugal forces generated by the rotation of the primary stitching member 61 can be used to activate a centrifugal clutch or coupling.

Similarly, the primary stitching member 61 is not directly driven or controlled by any dedicated drive means. Instead, the rotation of the tire building drum 2 is transferred onto the primary stitching member 61 when the primary stitching member 61 is brought into contact with the tire building drum 2 or the one or more plies 91 and/or the side wall 94 supported on said tire building drum 2. In other words, the primary stitching member 61 is configured to be passively driven by the tire building drum 2. In particular, the direction of rotation of the tire building drum 2 determines the direction of rotation of the primary stitching member 61. And because the positioning member 8 passively follows the rotation of the primary stitching member 61, it can be said that the tire building drum 2 indirectly drives and/or controls the rotation of the positioning member 8 about the primary stitching shaft 60 and/or the primary stitching axis S1.

This principle can be used to move the positioning member 8 between the standby position of figure 5 and the stitching position of figure 6. In particular, when the tire building drum 2 is rotated in a first rotation direction R1 about the drum axis D, as shown in figure 5, the primary stitching member 61 of the stitcher 6 rotates in a third rotation direction R3 which causes the positioning member 8 to rotate in the same third rotation direction R3, moving the secondary stitching member 71 away from the stitching position and into the standby position. When the secondary stitching member 71 is to be moved into the stitching position, the rotation direction of the tire building drum 2 is reversed, as shown in figure 6, to a second rotation direction R2 opposite to the first rotation direction R1, thereby causing the primary stitching member 61 to reverse its rotation direction to a fourth rotation direction R4 opposite to the third rotation direction R3. This causes the positioning member 8 to move in the same fourth rotation direction R4, moving the secondary stitching member 71 to the stitching position.

The brief moment of stopping and reversing the rotation direction of the tire building drum 2 can conveniently be used to terminate the primary stitching operation of the primary stitching member 61 along the first part P1 of the stitching path P and reposition the stitcher 6, if necessary, to be optimally positioned for the secondary stitching operation which involves folding the side wall 94 around the radially inner side 93 of the bead 92.

It will be apparent to one skilled in the art that the primary stitching member 61 and/or the secondary stitching member 71 can be driven directly and/or individually by a suitable drive means, such as a servo motor. Additionally or alternatively, other means of transferring rotation between the primary stitching member 61 and the positioning member 8 may be provided, for example mechanical transfer means such as gears or the like.

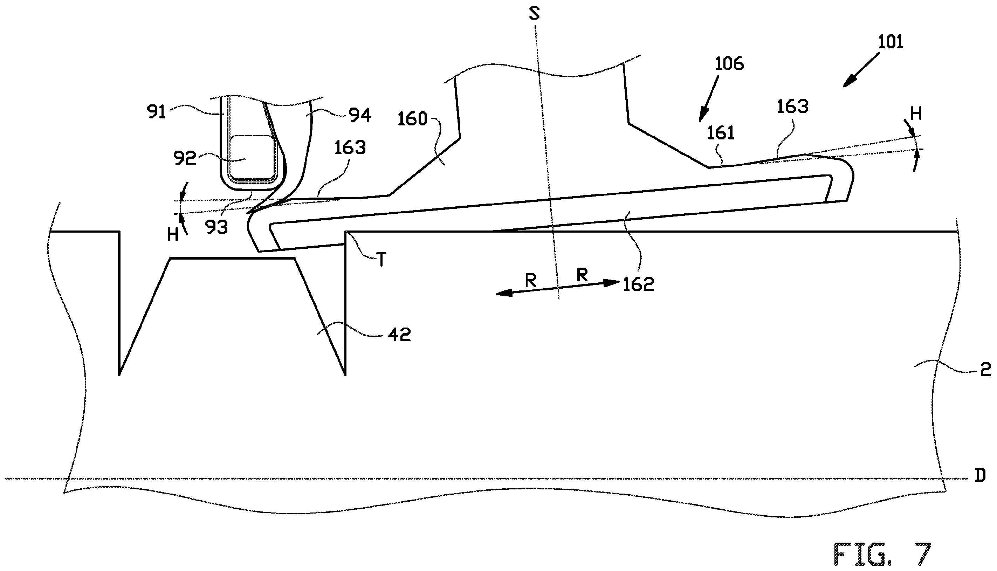

Figure 7 shows an alternative tire building machine 101 that differs from the aforementioned tire building machine 1 in that its stitcher 106 comprises a disc-shaped stitching body 160 having a first side 161 and a second side 162 opposite to the first side 161. The second side 162 is concave. Because of the concave side, the stitcher 106 can be moved closer to the circumference of the tire building drum 2 without colliding.

The disc-shaped stitching body 161 is concentric about a stitching axis S. The first side 161 defines a pressing surface 163 that is arranged at a slope or an inclination that is inclined away from the second side 162 at a clearance angle H in a radial direction R away from the stitching axis S. The clearance angle H is in a range of zero to fifteen degrees, preferably in a range of one to fifteen degrees, more preferably in a range of two to ten degrees, more preferably in a range of four to six degrees and most preferably approximately five degrees.

As shown in figure 7, the bead-lock segments 42 which are retracted into the recessed position relative to the rest of the tire building drum 2. The recess at the bead-lock segments 42 defines a transition T or transition edge between the retracted bead-lock segments 42 and the rest of the tire building drum 2. The stitcher 106 is positionable relative to the tire building drum 2, for example with the use of the manipulator 100 shown in figures 1-4, such that the concave second side 162 fits at least partially over said transition T. In other words, the transition T is at least partially received in the cavity defined by the second side 162. More in particular, the stitcher 106 is positioned relative to the tire building drum 2 such that the stitching axis S is at an oblique angle to a vertical plane. In this orientation, the stitcher 106 can be dipped or scooped underneath the radially inner side 93 of the bead 92 to reach into the limited space between said radially inner side 93 and the recessed bead-lock segments 42. The oblique orientation of the stitcher 106 also tilts at least a part of the pressing surface 163 towards or into a horizontal plane for securely pressing against the inner tip 95 of the side wall 94.

The stitcher 106 of the alternative tire building machine 101, in its stitch position, may be located or offset slightly off center with respect to the drum axis D, in a similar way to the secondary stitching member 71 in figure 6, such that its stitching axis S does not intersect with said drum axis D. In this way, one part of its circumference is kept in contact with the bead 92, whereas the other part remains free from and/or does not come into contact with said bead 92.

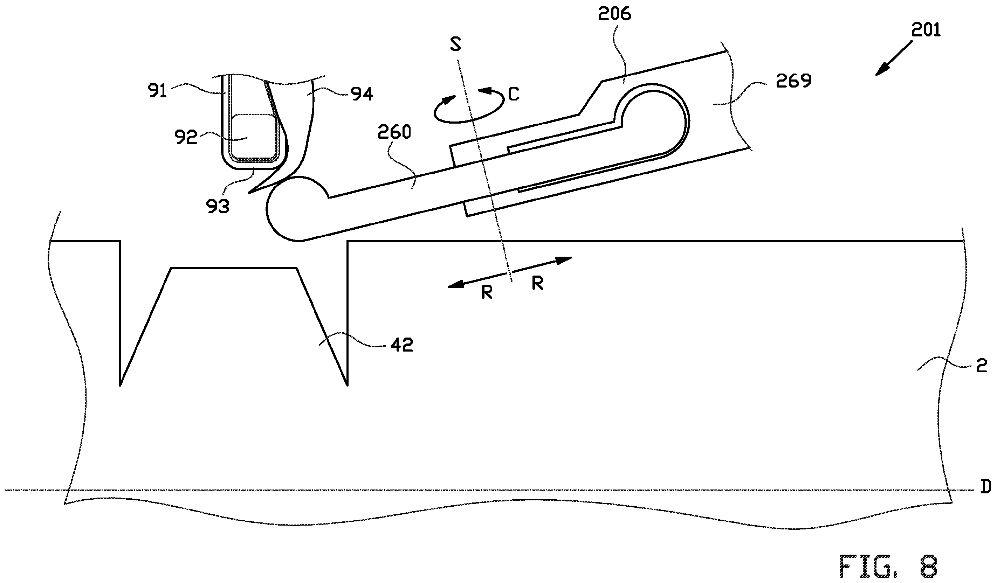

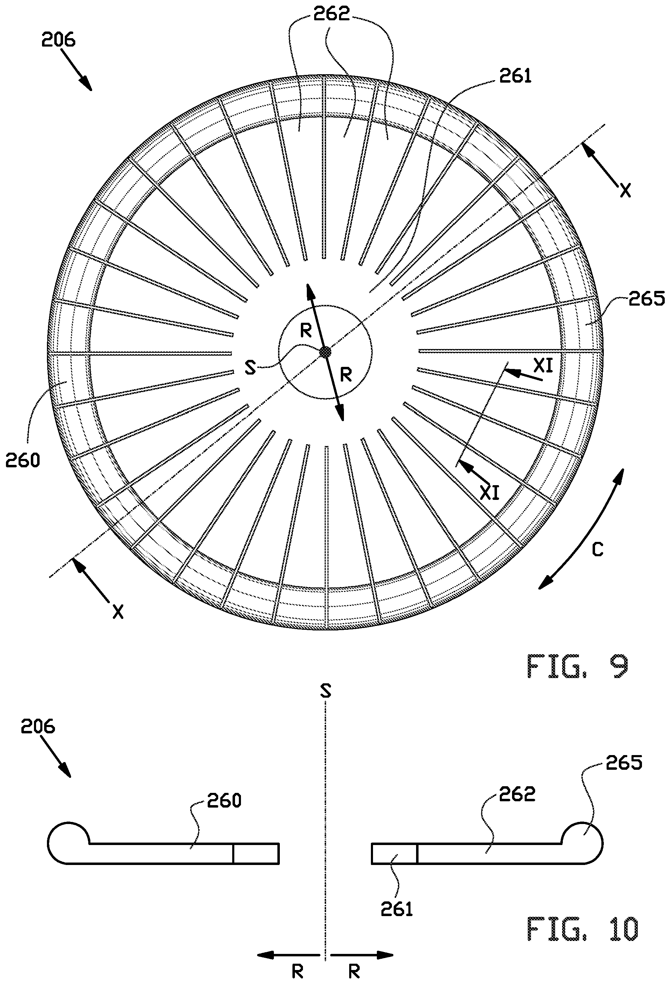

Figures 8-11 show a further alternative tire building machine 201 according to a third embodiment of the present invention. The alternative tire building machine 201 differs from the previously discussed tire building machines 1, 101 in that the further alternative tire building machine 201 comprises an alternative stitcher 206 having an alternative stitching body 260. The alternative stitching body 260 is rotatable about the stitcher axis S. As can best be seen in figures 9 and 10, the alternative stitching body 260 comprises a hub 261 and a plurality of stitching segments 262 circumferentially distributed about the stitcher axis S. The stitching segments are connected to and extending from the hub 261 in the radial stitcher direction P2. The stitching segments 262 are resilient with respect to the hub 261 in the axial stitcher direction A2. In other words, a terminal end of each stitching segment 262 is resiliently movable back and forth in the axial stitcher direction A2. The alternative stitching body 260 is flat or substantially flat and/or shaped like a disk. The hub 261 has a relatively low height in the axial stitcher direction A2 compared to the previously discussed stitching body 60. Hence, the alternative stitching body 60 can be more easily interposed between the bead 92 and the bead-lock segments 32, 42. In this exemplary embodiment, the stitching segments 262 each comprise at their respective terminal end a pressing portion 265 for pressing the side wall 94 against the radial inner side 93 of the bead 92. The pressing portion 265 bulges from the stitching segments 262 in the axial stitcher direction A2.

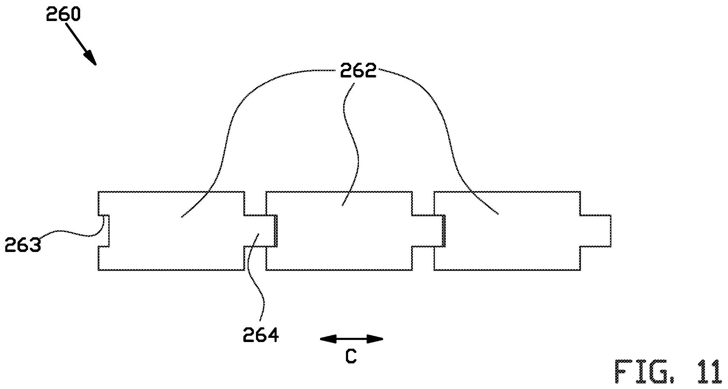

Optionally, as is best shown in figure 11, the stitching segments 262 are mutually coupled in a circumferential stitcher direction about the stitcher axis S. Due to the mutual coupling, a displacement in the axial stitcher direction A2 of the terminal end of one of the stitching segments affects the displacement of adjacent and/or proximate stitching segments 262. In other words, when one of the stitching segments 262 is displaced in the axial stitcher direction A2, the adjacent and/or proximate stitching segments are displaced as well. Each stitching segment 262 comprises a first profile section 263 and a second profile section 264 which is complementary to the first profile section 263. Preferably, the alternative stitching body 260 is manufactured by 3D-printing.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

### LIST OF REFERENCE NUMERALS

- 1: tire building machine
- 2: tire building drum
- 3: first drum half
- 31: bead-lock section
- 32: bead-lock segment
- 35: turn-up section
- 4: second drum half
- 41: bead-lock section
- 42: bead-lock segment
- 45: turn-up section
- 5: center section
- 51: crown segment
- 6: stitcher
- 6': further stitcher
- 60: primary stitching shaft
- 61: primary stitching member
- 62: stitching surface
- 63: cavity
- 64: mounting head
- 65: first bearing
- 70: secondary stitching shaft
- 71: secondary stitching member
- 8: positioning member
- 80: disc-shaped body
- 81: magnet
- 85: second bearing
- 9: green tire
- 91: ply
- 92: bead
- 93: radially inner side
- 94: side wall
- 95: inner tip
- 100: robotic manipulator
- 101: alternative tire building machine
- 106: alternative stitcher
- 160: disc-shaped stitching body
- 161: first side
- 162: second side
- 163: pressing surface
- 201: further alternative tire building machine
- 206: alternative stitcher
- 260: stitching body
- 261: hub
- 262: stitching segments
- 263: first profile section
- 264: second profile section
- 265: pressing portion
- A: axial direction
- C: circumferential direction
- D: drum axis
- H: clearance angle
- M: first side
- N: second side
- P: stitching path
- P1: first part of stitching path
- P2: second part of stitching path
- R: radial direction
- R1: first rotation direction
- R2: second rotation direction
- R3: third rotation direction
- R4: fourth rotation direction
- S: stitcher axis
- S1: primary stitcher axis
- S2: secondary stitcher axis
- T: transition

## Claims

1. Tire building machine comprising a tire building drum and a stitcher (106) for stitching a tire component, wherein the tire building drum (2) comprises bead-lock segments (42) which are retractable into a recessed position relative to the rest of the tire building drum, wherein the stitcher comprises a disc-shaped stitching body (160) having a first side (161) for pressing on the tire component during stitching and a second side (162) opposite to the first side,
**characterized in that**
the second side is concave, wherein the stitcher is positionable relative to the tire building drum (2) such that the concave second side (162) fits at least partially over a transition between the bead-lock segments (42) in the recessed position and the rest of the tire building drum.

2. Tire building machine according to claim 1, wherein the disc-shaped stitching body is concentric about a stitching axis, wherein the first side defines a pressing surface that is arranged at a slope that is inclined away from the second side at a clearance angle in a radial direction away from the stitching axis.

3. Tire building machine according to claim 2, wherein the clearance angle is in a range of zero to fifteen degrees.

4. Tire building machine according to claim 2, wherein the clearance angle is in a range of two to ten degrees.

5. Method for stitching a tire component with the use of a tire building machine according to claim 1, wherein the method comprises the step of:
- positioning the stitcher relative to the tire building drum such that the concave second side fits at least partially over the transition between the bead-lock segments in the recessed position and the rest of the tire building drum.

6. Method according to claim 5, wherein the disc-shaped stitching body is concentric about a stitching axis, wherein the first side defines a pressing surface that is arranged at a slope that is inclined away from the second side at a clearance angle in a radial direction away from the stitching axis, wherein the method comprises the step of:
- positioning the stitcher relative to the tire building drum such that the stitching axis is at an oblique angle to a vertical plane, thereby tilting at least a part of the pressing surface towards or into a horizontal plane.

## Patentansprüche

1. Reifenherstellungsmaschine mit einer Reifenherstellungstrommel (2) und einem Anhefter (106) zum Anheften einer Reifenkomponente, wobei die Reifenherstellungstrommel (2) Wulstverschlusssegmente (42) aufweist, die bezüglich des restlichen Teils der Reifenherstellungstrommel in eine zurückgesetzte Position rückziehbar sind, wobei der Anhefter einen scheibenförmigen Anhefterkörper (160) aufweist, der eine erste Seite (161) zum Anpressen auf die Reifenkomponente während des Anheftens und eine der ersten Seite entgegengesetzte zweite Seite (162) aufweist, **dadurch gekennzeichnet, dass**
die zweite Seite konkav ist, wobei der Anhefter derart bezüglich der Reifenherstellungstrommel (2) angeordnet werden kann, dass die konkave zweite Seite (162) zumindest teilweise auf einen Übergang zwischen den Wulstverschlusssegmenten (42) in der zurückgesetzten Position und dem restlichen Teil der Reifenherstellungstrommel passt.

2. Reifenherstellungsmaschine nach Anspruch 1, wobei der scheibenförmige Anhefterkörper konzentrisch um eine Anheftachse liegt, wobei die erste Seite eine Anpressoberfläche definiert, die auf einer Fläche angeordnet ist, die von der zweiten Seite aus mit einem Freiwinkel in radialer Richtung von der Anheftachse weg geneigt ist.

3. Reifenherstellungsmaschine nach Anspruch 2, wobei der Freiwinkel in einem Bereich von Null bis fünfzehn Grad liegt.

4. Reifenherstellungsmaschine nach Anspruch 2, wobei der Freiwinkel in einem Bereich von zwei bis zehn Grad liegt.

5. Verfahren zum Anheften einer Reifenkomponente unter Verwendung einer Reifenherstellungsmaschine nach Anspruch 1, wobei das Verfahren den folgenden Schritt aufweist:
- Positionieren des Anhefters derart bezüglich der Reifenherstellungstrommel, dass die konkave zweite Seite zumindest teilweise auf einen Übergang zwischen den Wulstverschlusssegmenten (42) in der zurückgesetzten Position und dem restlichen Teil der Reifenherstellungstrommel passt.

6. Verfahren nach Anspruch 5, wobei der scheibenförmige Anhefterkörper konzentrisch um eine Anheftachse liegt, wobei die erste Seite eine Anpressoberfläche definiert, die auf einer Fläche angeordnet ist, die von der zweiten Seite aus mit einem Freiwinkel in radialer Richtung von der Anheftachse weg geneigt ist, wobei das Verfahren den folgenden Schritt aufweist:
- Positionieren des Anhefters derart bezüglich der Reifenherstellungstrommel, dass die Anheftachse in einem schrägen Winkel zu einer vertikalen Ebene steht, wodurch zumindest ein Teil der Anpressoberfläche zu einer horizontalen Ebene hin oder in diese hinein geneigt wird.

## Revendications

1. Machine de construction de pneu comprenant un tambour de construction de pneu et un dispositif de rouletage (106) pour rouleter un composant de pneu, dans laquelle le tambour de construction de pneu (2) comprend des segments de verrouillage de talon (42) qui sont rétractables dans une position évidée par rapport au reste du tambour de construction de pneu, dans laquelle le dispositif de rouletage comprend un corps de rouletage en forme de disque (160) ayant un premier côté (161) pour appuyer sur le composant de pneu pendant le rouletage et un second côté (162) opposé au premier côté,
**caractérisée en ce que** :
le second côté est concave, dans laquelle le dispositif de rouletage peut être positionné par rapport au tambour de construction de pneu (2), de sorte que le second côté concave (162) s'adapte au moins partiellement sur une transition entre les segments de verrouillage de talon (42) dans la position évidée et le reste du tambour de construction de pneu.

2. Machine de construction de pneu selon la revendication 1, dans laquelle le corps de rouletage en forme de disque est concentrique autour d'un axe de rouletage, dans laquelle le premier côté définit une surface de pression qui est agencée au niveau d'une pente qui est inclinée à l'opposé du second côté à un angle de dégagement dans une direction radiale à l'opposé de l'axe de rouletage.

3. Machine de construction de pneu selon la revendication 2, dans laquelle l'angle de dégagement est dans une plage allant de zéro à quinze degrés.

4. Machine de construction de pneu selon la revendication 2, dans laquelle l'angle de dégagement est dans une plage allant de deux à dix degrés.

5. Procédé pour rouleter un composant de pneu à l'aide d'une machine de construction de pneu selon la revendication 1, dans lequel le procédé comprend l'étape suivante :
- positionner le dispositif de rouletage par rapport au tambour de construction de pneu de sorte que le second côté concave s'adapte au moins partiellement sur la transition entre les segments de verrouillage de talon dans la position évidée et le reste du tambour de construction de pneu.

6. Procédé selon la revendication 5, dans lequel le corps de rouletage en forme de disque est concentrique autour d'un axe de rouletage, dans lequel le premier côté définit une surface de pression qui est agencée au niveau d'une pente qui est inclinée à l'opposé du second côté à un angle de dégagement dans une direction radiale à l'opposé de l'axe de rouletage, dans lequel le procédé comprend l'étape consistant à :
- positionner le dispositif de rouletage par rapport au tambour de construction de pneu de sorte que l'axe de rouletage est à un angle oblique par rapport à un plan vertical, inclinant ainsi au moins une partie de la surface de pression vers ou dans un plan horizontal.
